# EUROPÄISCHE PATENTSCHRIFT

(11) **EP 0 277 349 B1**
(45) Veröffentlichungstag und Bekanntmachung des Hinweises auf die Patenterteilung: **26.05.1993**
(21) Anmeldenummer: 87119028.6
(22) Anmeldetag: 22.12.1987
(51) Int. Cl.: F21M 7/00

(54) **Scheinwerfereinheit für Fahrzeuge**
Headlamp unit for vehicles
Ensemble projecteur pour véhicules

(30) Priorität: 03.02.1987 DE 3703129
(43) Veröffentlichungstag der Anmeldung: 10.08.1988
(73) Patentinhaber: Hella KG Hueck & Co., D-59538 Lippstadt (DE)
(72) Erfinder: Döring, Berthold, D-4760 Werl-Büderich (DE); Schulte, Heinz, Elwood Victoria (AU)

(56) Entgegenhaltungen:
- FR-E- 96 683
- US-A- 4 198 674

## Beschreibung

Die Erfindung betrifft eine Scheinwerfereinheit für Fahrzeuge, bestehend aus je einem in ein gemeinsames Gehäuse um mindestens eine Achse verstellbar eingesetzten Fernscheinwerfer und Abblendscheinwerfer, deren Reflektoren zu einer Einheit zusammengefügt und hinter einer gemeinsamen Abdeckscheibe angeordnet sind, wobei der Abblendscheinwerfer einen elliptischen Reflektor, eine Sammellinse, eine im Strahlengang vor der Sammellinse in ihrem Brennpunkt angeordneten Blende und eine im Strahlengang hinter der Linse eingesetzten Streuscheibe aufweist, die über ein Gestell fest zusammengebaut sind. Bei derartigen Scheinwerfern ergibt sich die Schwierigkeit, die zwischen Linse und Abdeckscheibe angeordnete Streuscheibe fest mit dem aus Reflektor, Linse und Blende bestehendem System zu verbinden. Eine solche feste Verbindung muß hergestellt werden, damit beim Einstellen der Leuchtweite sich nicht der Auftreffwinkel des Lichts auf die Streuscheibe verändert.

Des weiteren ergibt sich die Aufgabe, den Einblick in das Innere des Abblendscheinwerfers abzuschirmen.

Diese Aufgaben werden erfindungsgemäß dadurch gelöst, daß an den Reflektor für das Fernlicht ein Tubus angeformt ist, dessen Mittelachse parallel zur optischen Achse des Fernlichtreflektors verläuft, der die Linse und das zwischen Linse und Reflektor angeordnete Gestell des Abblendscheinwerfers umgibt und mit seinem vorderen freien Ende die Streuscheibe trägt.

Bei einer vorteilhaften Ausgestaltung der Erfindung geht der Tubus auf der dem Fernlichtreflektor abgewandten Seite in eine Sichtblende über, die in etwa äquidistant zu dem dem Abblendscheinwerfer benachbarten Teil des Fernlichtreflektors verläuft. Diese Sichtblende soll den Einblick in den Raum zwischen Abblendlicht, Reflektor und Gehäusewandung verhindern.

Dieser Raum ist für die Anbringung der Verstellelemente notwendig.

Weiterhin ist es zweckmäßig, den Tubus nach oben hin geöffnet zu halten, damit die von der Glühlampe, von der Linse und von dem die Linse tragenden Gestell erwärmte Luft besser zirkulieren kann. Weiterhin ist es zweckmäßig, den Tubus und die Sichtblende nach außen hin silberfarbig zu beschichten, vorzugsweise zusammen mit dem Bedampfen des Fernlichtreflektors.

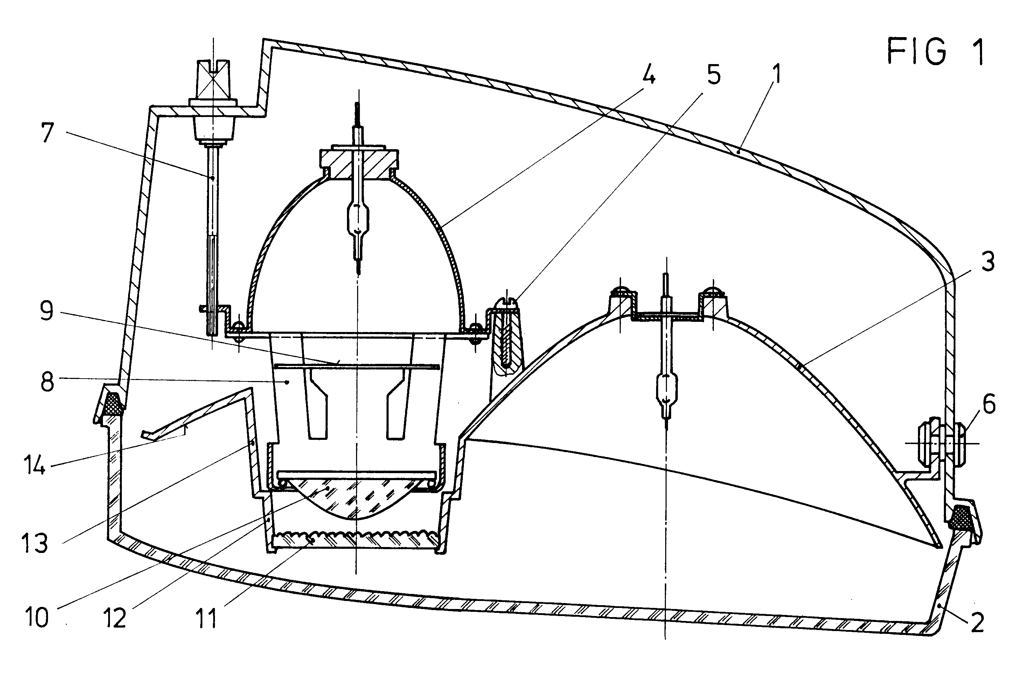

Die Zeichnung veranschaulicht ein vorteilhaftes Ausführungsbeispiel der Erfindung, und zwar zeigen
Figur 1 einen horizontalen Mittelschnitt durch die Scheinwerfereinheit und

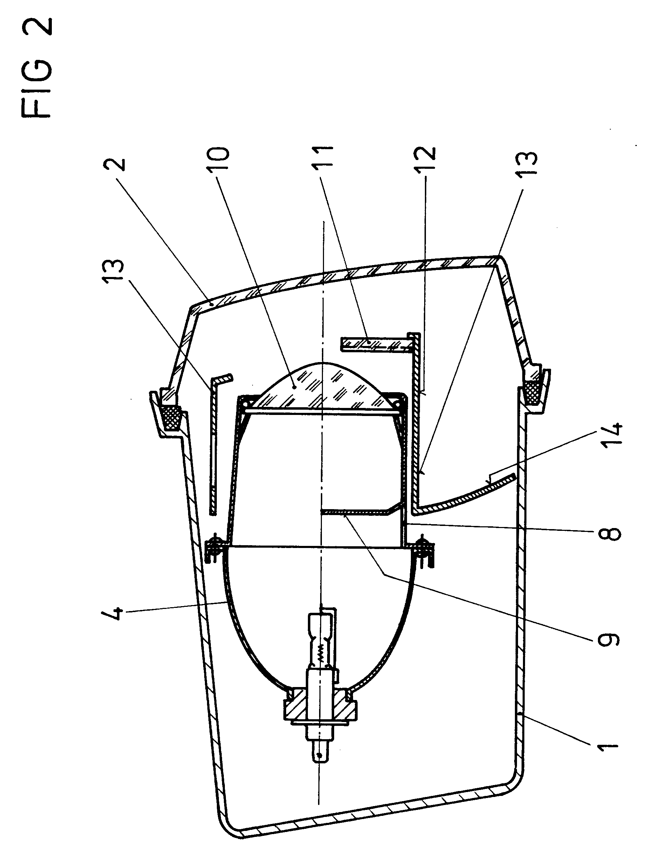

Figur 2 einen vertikalen Schnitt durch den Abblendscheinwerfer.

Das in der Fahrzeugkarosserie befestigte Gehäuse (1) ist nach vorn hin durch die Abdeckscheibe (2) abgedeckt. Der Reflektor (3) für das Fernlicht und der Reflektor (4) für das Abblendlicht sind durch eine Schraubverbindung (5) miteinander verbunden. Diese aus Reflektor (3) und Reflektor (4) bestehende Einheit ist im Gehäuse (1) verstellbar gelagert. Dazu ist der Reflektor (3) über einen elastischen Bolzen (6) mit der Gehäusewandung verbunden, während der Reflektor (4) über eine schraubbare Verstellvorrichtung (7) mit dem Gehäuseboden verbunden ist. Der Reflektor (4) des Abblendscheinwerfers trägt ein Gestell (8), an welchem die Blende (9) angeformt ist. In die Frontseite des Gestells (8) ist die Linse (10) eingesetzt. Reflektor (4), Gestell (8), Blende (9) und Linse (10) bilden somit eine bauliche Einheit. Der Linse vorgeordnet ist die Streuscheibe (11), die so gelagert sein muß, daß diese sich zwangsläufig mit dem Verstellen des Reflektors (4), z. B. zur Einjustierung der Leuchtweite entsprechend mitverstellt. Dieses wird dadurch bewerkstelligt, daß die Streuscheibe (11) in dem vorderen Ende des Tubusses (12) eingesetzt ist, der unmittelbar an den Fernlichtreflektor (3) angeformt ist. Da der Fernlichtreflektor (3) und der Abblendlichtreflektor (4) fest miteinander verbunden sind, bildet somit auch die Streuscheibe (11) mit dem Reflektor (4) eine nur gemeinsam verstellbare Einheit.

Der Tubus (12) ist so ausgebildet, daß er mit seinem der Streuscheibe abgewandten Randbereich (13) das Gestell (8) umgibt, so daß der Einblick von der Außenseite des Scheinwerfers auf das Gestell (8) und in den Reflektor (4) versperrt wird.

Um gleichzeitig auch den Einblick in den Bereich zwischen Reflektor (4) und der Seitenwandung des Gehäuses (1) zu verhindern, geht der Tubus seitlich und im hinteren Bereich in eine Sichtblende (14) über. Diese Sichtblende (14) verhindert im seitlichen Bereich den Einblick auf die Einstellvorrichtung (7).

Selbst wenn in die Abdeckscheibe (2) in dem Bereich vor der Einstellvorrichtung (7) Linsen oder Prismen angebracht wären, die den Einblick in diesen Bereich des Scheinwerfergehäuses verhindern würden, so würde diese Stelle der Abdeckscheibe jedoch gegenüber den anderen Bereichen dunkel erscheinen, wenn die Sichtblende (14) hier nicht angeordnet wäre. Diese stilistische Verbesserung wird noch dadurch unterstützt, daß sowohl der Tubus als auch die Sichtblende zusammen mit dem Reflektor (3) silberfarbig bedampft werden.

## Patentansprüche

1. Scheinwerfereinheit für Fahrzeuge, bestehend aus je einem in ein gemeinsames Gehäuse (1) um mindestens eine Achse verstellbar eingesetzten Fernscheinwerfer und Abblendscheinwerfer, deren Reflektoren (3,4) zu einer Einheit zusammengefügt und hinter einer gemeinsamen Abdeckscheibe (2) angeordnet sind, wobei der Abblendscheinwerfer einen elliptischen Reflektor (4), eine Sammellinse (10), eine im Strahlengang vor der Sammellinse in ihrem Brennpunkt angeordneten Blende (9) und eine im Strahlengang hinter der Linse eingesetzten Streuscheibe (11) aufweist, die über ein Gestell (8) fest zusammengebaut sind, dadurch gekennzeichnet, daß an den Reflektor (3) für das Fernlicht ein Tubus (12) angeformt ist, dessen Mittelachse parallel zur optischen Achse des Fernlichtreflektors (3) verläuft, der die Linse (10) und das zwischen Linse (10) und Reflektor (4) angeordnete Gestell (8) des Abblendscheinwerfers umgibt und mit seinem vorderen freien Ende die Streuscheibe (11) trägt.

2. Scheinwerfereinheit nach Anspruch 1, dadurch gekennzeichnet, daß der Tubus (12) auf der dem Fernlichtreflektor (3) abgewandten Seite in eine Sichtblende (14) übergeht, die in etwa äquidistant zu dem dem Abblendscheinwerfer benachbarten Teil des Fernlichtreflektors verläuft.

3. Scheinwerfereinheit nach Anspruch 1 oder 2, dadurch gekennzeichnet, daß der Tubus (12) nach oben hin geöffnet ist.

4. Scheinwerfereinheit nach einem der vorstehenden Ansprüche, dadurch gekennzeichnet, daß der Tubus (12) und die Sichtblende (14) nach außen hin silberfarbig beschichtet sind.

## Claims

1. A headlamp unit for vehicles, consisting of a main beam headlamp and a dipped beam headlamp each mounted so that they are adjustable about at least one axis in a common housing (1), the reflectors (3, 4) of which are joined together to form one unit and are disposed behind a common cover glass (2), wherein the dipped beam headlamp has an elliptical reflector (4), a focusing lens (10), a screen (9) disposed in the path of the beam in front of the focusing lens at its focus, and a headlight lens (11) installed in the path of the beam after the focusing lens, which are assembled fixed by means of a mounting (8), characterized in that a tube body (12) is formed on the reflector (3) for the main beam, wherein the centre line of the tube body runs parallel to the optical axis of the main beam reflector (3), and the tube body surrounds the lens (10) and the mounting (8) of the dipped beam headlamp disposed between the lens (10) and the reflector (4), and carries the headlamp lens (11) at its free front end.

2. A headlamp unit according to claim 1, characterised in that the tube body (12) extends into an optical screen (14) on its side remote from the main beam reflector (3), which optical screen runs approximately equidistantly from the part of the main beam reflector which is adjacent to the dipped beam headlamp.

3. A headlamp unit according to claims 1 or 2, characterised in that the tube body (12) is open at the top.

4. A headlamp unit according to any one of the preceding claims, characterised in that the tube body (12) and the optical screen (14) are provided with a silver-coloured coating facing the outside.

## Revendications

1. Bloc projecteur pour véhicules, comprenant un projecteur de plein éclairage de route et un projecteur d'éclairage réduit de croisement disposés chacun orientables autour d'au moins un axe dans un boîtier (1) commun, dont les réflecteurs (3, 4) sont réunis en un ensemble et placés derrière une glace de recouvrement (2) commune, le projecteur d'éclairage réduit comportant un réflecteur élliptique (4), une lentille convergente (10), un diaphragme (9) disposé dans la marche des rayons devant la lentille convergente, au foyer de celle-ci, et un diffuseur (11) monté derrière la lentille dans la marche des rayons, qui sont assemblés de façon fixe au moyen d'une monture (8), caractérisé en ce qu'un élément tubulaire (12) est formé sur le réflecteur (3) pour l'éclairage de route, élément tubulaire dont l'axe central est parallèle à l'axe optique du réflecteur (3) de l'éclairage de route, qui entoure la lentille (10) et la monture (8), laquelle est disposée entre la lentille (10) et le réflecteur (4) du projecteur d'éclairage réduit, et dont l'extrémité avant libre porte le diffuseur (11).

2. Bloc projecteur selon la revendication 1, caractérisé en ce que l'élément tubulaire (12) se raccorde, du côté opposé au réflecteur (3) pour l'éclairage de route, à un cache (14) qui s'étend à peu près à égale distance par rapport à la partie du réflecteur pour l'éclairage de route voisine du projecteur d'éclairage réduit.

3. Bloc projecteur selon la revendication 1 ou 2, caractérisé en ce que l'élément tubulaire (12) est ouvert vers le haut.

4. Bloc projecteur selon une des revendications précédentes, caractérisé en ce que l'élément tubulaire (12) et le cache (14) sont pourvus d'un revêtement de couleur argentée vers l'extérieur.
